# EUROPEAN PATENT SPECIFICATION

(11) **EP 4 215 728 B1**
(45) Date of publication and mention of the grant of the patent: **08.10.2025**
(21) Application number: 23151941.4
(22) Date of filing: 17.01.2023
(51) Int. Cl.: F01N 3/20, F01N 3/36, F01N 13/00, B01D 53/94, B01J 29/072, B01J 29/076, F01N 9/00

(54) **AN EXHAUST GAS AFTER-TREATMENT SYSTEM AND A PROPULSION SYSTEM INCLUDING THE AFTER-TREATMENT SYSTEM**
ABGASNACHBEHANDLUNGSSYSTEM UND ANTRIEBSSYSTEM MIT DEM NACHBEHANDLUNGSSYSTEM
SYSTÈME DE POST-TRAITEMENT DE GAZ D'ÉCHAPPEMENT ET SYSTÈME DE PROPULSION COMPRENANT LE SYSTÈME DE POST-TRAITEMENT

(30) Priority: 20.01.2022 IT 202200000956
(43) Date of publication of application: 26.07.2023
(73) Proprietor: FPT Motorenforschung AG, 9320 Arbon (CH)
(72) Inventor: TSINOGLOU, Dimitrios, 9320 Arbon (CH); PIDRIA, Marco Federico, 9320 Arbon (CH); KOIRALA, Rajesh, 9320 Arbon (CH); WACHTER, Ralph, 9320 Arbon (CH); MERLONE BORLA, Edoardo, 9320 Arbon (CH)
(74) Representative: Fiume, Orazio

(56) References cited:
- EP-A1- 3 180 106
- WO-A1-2017/180114
- JP-A- 2017 227 181
- US-A1- 2010 098 612

## Description

### Field of the invention

The present invention relates to the field of exhaust gas after-treatment systems and in particular to the field of Diesel cycle engines.

### State of the art

Diesel cycle engines are generally equipped with an exhaust gas after-treatment system (ATS) which includes in succession
- a Diesel Oxidation catalyst,
- a DPF (Diesel Particulate Filter) ed
- a selective reduction catalyst SCR (Selective Catalytic Reduction) designed to reduce nitrogen oxides (NOx) by injecting, upstream of the catalyst itself, a urea based reducing agent in order to produce ammonia (NH3) useful for NOx conversion.

Often a so called "Clean Up catalyst" is arranged immediately downstream of the SCR in order to neutralize an excess of ammonia produced in the SCR to neutralize NOx. The most known and implemented SCR catalysts are CU-zeolite and Fe-zeolite catalysts. The latter displays an improved stability but a high-temperature selectivity.

According to the present description, with "high-temperature" a temperature exceeding 400-450°C is meant. Several kinds of SCR are known.

Future emission regulations in Europe and elsewhere are expected to include threshold limits for pollutants that were not regulated so far. Among those pollutants is Nitrous Oxide (N2O), which is expected to be regulated due to its very strong Global Warming Potential (GWP), which is 265-298 times higher than that of CO2. N2O is already a regulated pollutant in the United States. N2O is a pollutant that is mainly produced by the Selective Catalytic Reaction (SCR) catalysts, as a by-product of NOx reduction by NH3. In the current state of the art, the ATS is a producer of N2O, and the N2O production is proportional to the amount of converted NOx.

It is also known an SCR catalyst of titania-vanadia (TiV) technology, which is used to convert the NOx in the exhaust stream into N2, similarly and alternative to current commercial implementations based on CU or FE-zeolite catalysts. A TiV SCR catalyst has typically a very low N2O selectivity, in the temperature range 200-400°C, under most common exhaust gas composition conditions. In this temperature range, this technology is best-in-class with respect to low N2O production, which makes it an attractive candidate for future emission regulations. However, N2O production increases significantly above 450°C, which may lead to exceeding future emission thresholds. In particular, this SCR produces N2O proportionally to the amount of NOx it converts and the proportionality factor, defined as the molar ratio of N2O produced divided by NOx converted, ranges between 0.5% and 20% for most common technologies and operating conditions.

WO2017180114 discloses an exhaust system for a diesel engine comprises: an oxidation device for CO and/or HC, comprising a platinum group metal (PGM) and a substrate, wherein the PGM is selected from platinum (Pt), palladium (Pd) and a combination thereof; an injector for introducing an ammonia precursor into the exhaust gas, which is downstream of the emissions control device: a first selective catalytic reduction (SCR) catalyst downstream of the injector for introducing an ammonia precursor into the exhaust gas, wherein the first SCR catalyst comprises a substrate and a first SCR composition, wherein the substrate is either a flow-through substrate or a filtering substrate; a second SCR catalyst downstream of the first selective catalytic reduction catalyst, wherein the second SCR catalyst comprises a flow-through substrate and a second SCR composition; and wherein at least one of the emissions control device and the first SCR catalyst has a filtering substrate.

Also JP 2017 227181 A describes an SCR after-treatment system.

If not specifically excluded in the detailed description that follows, what is described in this chapter is to be considered as an integral part of the detailed description.

### Summary of the invention

Scope of the present invention is to present an ATS specifically designed for Diesel engines and capable to sensibly reduce the N2O production at high temperature.

The basic idea of the present idea is to implement a first SCR catalyst, such as CU-Zeolite, provided of its urea based reducing agent doser arranged immediately upstream of the first SCR and to implement a second iron-zeolite (Fe-zeolite) SCR arranged immediately downstream of the first SCR and to implement means to introduce hydrocarbons along the ATS, upstream at least the second SCR catalyst.

Usually, an SCR provided of a reducing agent doser is named as "active". According to the present invention, only the first SCR is active, while the second SCR is passive.

The second SCR of FE-zeolite is capable to convert N2O species over a predetermined temperature threshold.

However, under such temperature threshold, the second SCR catalyst is capable to convert N2O when the exhaust stream is enriched with HC.

Therefore, according to the invention, hydrocarbons are introduced in the ATS in order to convert N2O.

The introduction of hydrocarbons can be calculated considering the selectivity of the first SCR catalyst and the temperature at the second SCR catalyst.

The main advantage of this invention is that it enables the engine to be calibrated so that it produces higher values of engine-out NOx emissions, while still complying with both NOx and N2O emission limits.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
- Figure 1 shows a diagram of a Fe-Zeolite SCR N2O percentage conversion to N2 over temperature, with a Gas composition at inlet of the Fe-Zeolite SCR of: 30 ppm N2O, 100ppm NO, 10%02, 5%H2O, and NH3/NOx ratio according to the graph legend;
- Figure 2 discloses a diagram of N2O percentage production over the temperature for different SCR catalyst technologies, based on Cu-zeolite and Fe-zeolite, at different exhaust gas compositions with respect to the ratio between NO2 and total NOx;
- Figure 3 discloses schematically a portion of the ATS according to the present invention;
- Figures 4a and 4b show two diagrams for two corresponding different temperature values, where the N2O conversion is disclosed over the time scale in connection with an HC injection in the ATS such as to reach the second SCR;
- Figure 5 discloses one example of flow diagram of a preferred embodiment of the method of the present invention.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

### Detailed description of exemplary embodiments

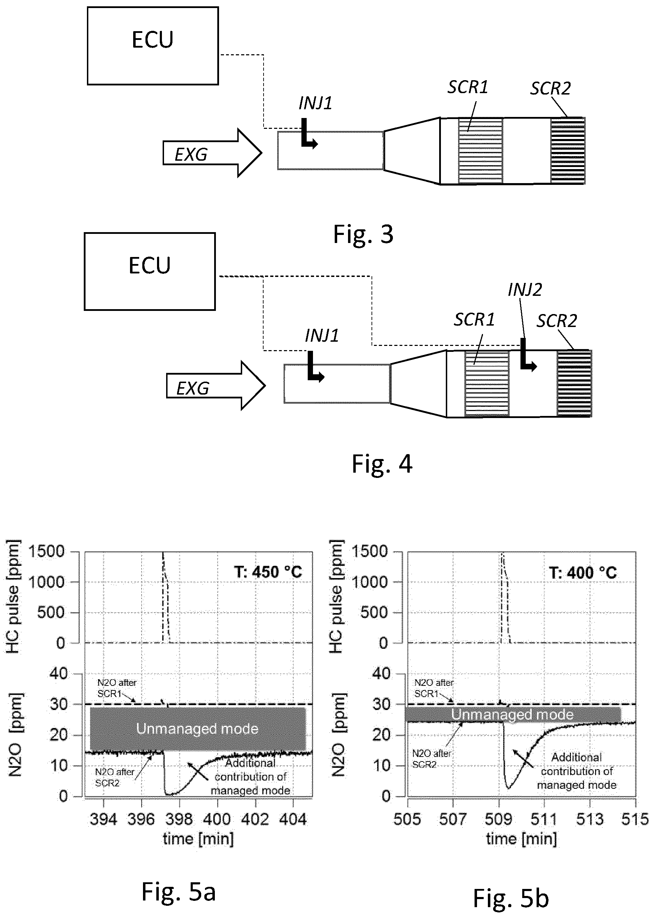

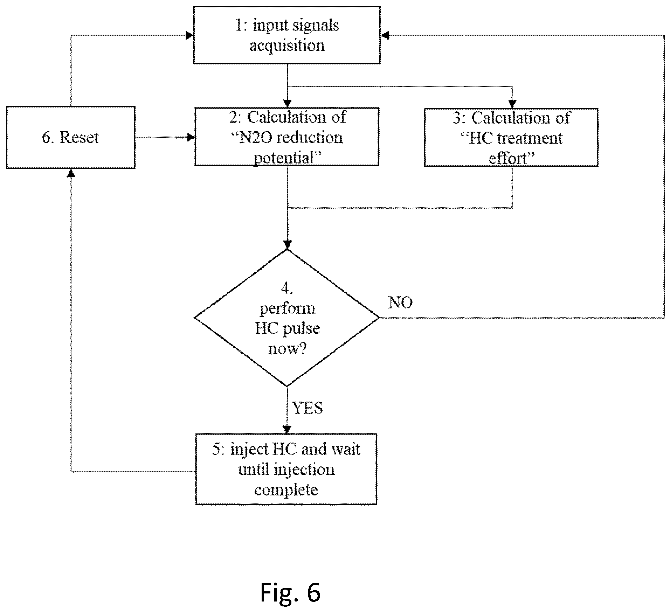

Figure 3 shows a preferred embodiment of a portion of an ATS.

According to the present invention, the NOx conversion is realized through a tandem of two SCRs, where the first one SCR1, is active and the second one, SCR2, is of the iron-zeolite type.

A urea based doser INJ1 is arranged immediately upstream of the SCR tandem.

No urea based doser is arranged in between the two SCRs.

Preferably, the ATS includes in succession a DOC (not disclosed), a DPF (not disclosed) and the tandem of the above SCRs. Here, the succession relates to the gas flow circulation, indicated through the big arrow in figure 3.

Optionally, the ATS can include a CUC catalyst, not disclosed, arranged as last device of the ATS to manage possible ammonia excess.

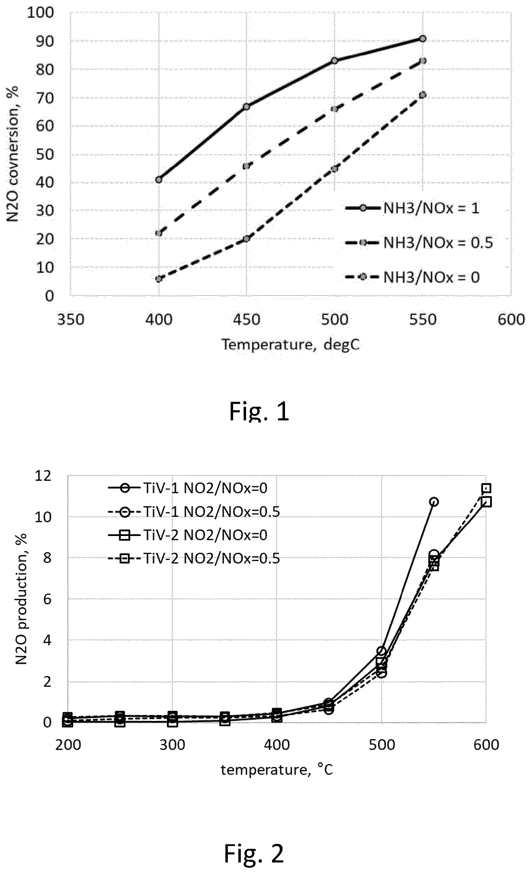

Figure 1 discloses the capability of the second SCR to convert N2O over the temperature for different NH3/NOx ratios. It is clear that, being the second SCR passive, namely, not provided of a corresponding reducing agent doser, the ratios NH3/NOx > 0 are achieved for NH3 slippage from the first SCR.

Figure 1 clarifies that the second SCR is capable to convert N2O starting from a temperature of 400°C and this capability reaches 40% at 500°C.

Furthermore, its capability increases relevantly when NH3 and NOx reaches according to the ratios 0.5 and 1.

This means that if the first SCR is not capable to convert the entire NOx produced by the engine, the dosing of NH3 such as to slip in the second SCR in the same ratio with the unconverted NOx is beneficial for the complete conversion of the NOx and almost complete conversion of N2O.

According to the invention, the N2O conversion is "managed", in the sense that the exhaust flow is enriched with carbon monoxide (CO) and/or hydrocarbons (HC) at least according to a cyclic injection scheme.

Thanks to the introduction of carbon monoxide (CO) and/or hydrocarbons (HC), the capability of the second SCR, FE-zeolite, to convert N2O is strongly increased starting from low temperature conditions, namely starting from the temperatures where the first SCR start to convert NOx circa 250°C.

Figure 2 discloses diagrams of N2O production over temperature for two known SCR technologies, each at two representative exhaust gas compositions with respect to ratio between NO2 and total NOx.

The Fe-zeolite (Fe in the figure), discloses a low N2O production throughout the temperature range. Particularly at temperatures above 450°C, the N2O production reduces with increasing temperature. This reduction is attributed to the inherent ability of the Fe-zeolite to reduce N2O at said temperature range, as evidenced in Fig. 1.

The Cu-SCR discloses a higher N2O production in the low temperature range 200-300°C with respect to the Fe-zeolite SCR, however, it is known that Cu-SCR discloses better performances for NOx conversion in the same temperature range. Therefore, a tandem including Cu-zeolite SCR and a Fe-zeolite SCR could represent an optimal compromise.

Figures 4a and 4b disclose two diagrams plotted for two different operating temperatures, respectively 450°C and 400°C.

As long as the second SCR (SCR2) is unmanaged, namely no CO and/or HC is introduced upstream of the second SCR, the N2O percentage surviving after the second SCR is around 85% at 400°C and around 50% at 450°C.

The introduction of HC as a spike at about the time instant 397 causes a sudden reduction of the N2O percentage surviving after the second SCR. The surviving percentage is about 5% at 400°C and about 0% at 450°C.

Therefore, the HC injection is effective also at low temperature.

According to the invention, the HC is introduced as pulses, namely for relatively short time intervals, during the ATS operation.

The introduced reducing species reduce the incoming N2O almost completely during the pulse, even at operating temperatures lower than 400-450°C.

The introduced reducing species reduce the catalytic material of the second SCR. After an injection pulse has ended, part of the incoming N2O is consumed to re-oxidize the catalytic material, thus providing an N2O reduction effect that lasts beyond the duration of the pulse of reducing species. This is the reason for which a constant introduction of the HC is not required even if possible.

The introduction of HC can be operated in two different ways: a) through fuel post-injection, which is defined as injection of fuel from the engine's fuel injection system, in a manner that does not allow this fuel to combust in the engine, usually during exhaust stroke, which is not covered by the present invention, or b) through a dedicated second injector INJ2 according to the claimed subject-matter and disclosed in figure 4. The second injector can be arranged in any place along with the ATS upstream of the second SCR, however, it is preferable to arrange it upstream the DOC or upstream of the DPF, considering the classical sequence DOC+DPF+SCR.

In order to avoid any confusion between the two ways to introduce HC in the ATS, the injector INJ2 is arranged "at the ATS", in order to avoid any confusion with the fuel injectors associated with the internal combustion engine. In the same way we can affirm that the second injector is arranged downstream of the exhaust manifold of the engine, indeed the large arrows in the figure 3 and 4 represent the exhaust gas EXG produced by the internal combustion engine. In case the engine is provided of a turbocharger, the first and second injector are clearly arranged downstream the turbine of the turbocharger.

While the urea based reducing agent is arranged immediately upstream of the first SCR, the second injector could be arranged both immediately upstream or immediately downstream of the first SCR, but clearly upstream of the second SCR in order to achieve the abatement of N2O at the second SCR.

Both said methods of HC injection can be used not only to enhance the N2O conversion, but also to force DPF regenerations.

If the second injector is located upstream of a DOC or DPF, in order to enable the HC pulses to reach the second SCR, without being oxidised in the DOC or DPF, HC pulses are synchronized with a condition of low oxygen in the exhaust gas, such as during an engine acceleration or in general when the air/fuel ratio is circa stoichiometric.

It is not easy to produce post-injections during low oxygen conditions in the exhaust gas, thus the injector at the ATS is the best solution to achieve the present result.

As a consequence, the arrangement of the second injector between the two SCRs avoid the implementation of any kind of injection synchronization. The second injector can be alternatively arranged downstream of the first SCR, as disclosed in figure 3. In this case it is only implemented for N2O conversion.

According to a preferred control strategy, the HC is introduced through post-injections and/or through a fuel injector INJ2 as long as the first SCR temperature is in the temperature is in the temperature range of [250 - 450] °C.

When the SCR1 temperature is in that temperature range, the frequency of HC pulses, and the amount of HC introduced in each pulse are calculated by a computer algorithm that is executed in an on-board Electronic Control Unit. This algorithm preferably takes into account: the measured or calculated SCR1 temperature, the measured or calculated NOx concentration in the exhaust stream, the exhaust gas flow, and the measured or calculated oxygen content in the exhaust gas.

According to another preferred control strategy that can be combined with the previous one, when the first SCR temperature exceeds a predetermined threshold, for example 500°C or higher, the first doser INJ1 is controlled to saturate the first SCR and to at least partially fill the second SCR.

In other words, the reducing agent injection is managed
- To neutralize NOx,
- To neutralize N2O.

Figure 5 discloses an example of flow diagram according to the present invention.

According to the present invention the method depicted through figure 5 includes the following steps:
- (Step 1) acquisition of input signals by means of measurement or calculation representative of:
   o Temperature value at second SCR
   o NOx concentration in the engine-out exhaust flow
   o Exhaust gas mass flow
   o Engine torque
   o Amount of fuel injected in the combustion chamber
   o Oxygen content in the exhaust gas
- (Step 2) using the input signals from (step 1) for calculating the "N2O reduction potential", defined as the capability of the second SCR to reduce N2O at current conditions,
- (Step 3) using the input signals from (step 1), calculation of "HC treatment effort", defined as the quantity of hydrocarbons required to fully re-instate the N2O reduction potential of second SCR to its maximum capability, when a hydrocarbon pulse is introduced in the current conditions;
- (Step 4) based on the calculations of step 2 and step 3, decision if a hydrocarbon pulse is needed, or if such hydrocarbon pulse can be postponed;
   if (step 4 = yes) it is decided to introduce a HC pulse,
- (Step 5) start injection pulses to introduce HC quantity calculated (in step 3) and wait until said amount has been injected completely, then
- (Step 6) reset of the previous acquisitions and calculations is carried out and return to the start (Step 1);
- otherwise, if (step 4 = no) it is decided to postpone the introduction of a HC pulse, the iteration loop returns to the start (step 1) directly.

It is important to note that steps 2 and 3 can be executed in any order or even in parallel as depicted in figure 5. The present invention can be advantageously carried out by means of a computer program, which comprises coding means for carrying out one or more steps of the method, when this program is executed on a computer. Therefore, it is intended that the scope of protection extends to said computer program and further to computer readable means comprising a recorded message, said computer readable means comprising program coding means for carrying out one or more steps of the method, when said program is run on a computer.

From the above description, the person skilled in the art is able to realize the object of the invention without introducing further construction details.

## Claims

1. Method to control an exhaust gas after-treatment system for a Diesel engine including
- a first Selective Reduction Catalyst SCR (SCR1) coupled with
- a second SCR (SCR2) of the iron-zeolite type arranged immediately downstream of the first SCR according to a gas stream circulation and
- a urea based reducing agent doser (INJ1) arranged immediately upstream of the first SCR, according to said gas stream circulation, and
- hydrocarbons injection means (INJ2) arranged at the after-treatment system to introduce hydrocarbons therein in order to cooperate with said second SCR to convert N2O produced by said first SCR,
the method comprising the following steps:
- Step 1: acquisition of input signals by means of measurement or calculation representative of:
o Temperature value at second SCR
o NOx concentration in the engine-out exhaust flow
o Exhaust gas mass flow
o Engine torque
o Amount of fuel injected in the combustion chamber
o Oxygen content in the exhaust gas
- Step 2: using the input signals from Step 1 for calculating the "N2O reduction potential", defined as the capability of the second SCR to reduce N2O at current conditions,
- Step 3: using the input signals from Step 1, for calculating "HC treatment effort", defined as the quantity of hydrocarbons required to fully re-instate the N2O reduction potential of second SCR to its maximum capability, when a hydrocarbon pulse is introduced in the current conditions;
- Step 4: based on the calculations of Step 2 and Step 3, decision if a hydrocarbon pulse is needed, or if such hydrocarbon pulse can be postponed;
if Step 4 = yes: it is decided to introduce a HC pulse, then
- Step 5: starting injection pulses to introduce HC quantity calculated in Step 3 and wait until said amount has been injected completely, then
- Step 6: reset of the previous acquisitions and calculations is carried out and return to the start Step 1;
- otherwise, if Step 4 = no: it is decided to postpone the introduction of a HC pulse, the iteration loop returns to the start Step 1 directly.

2. An exhaust gas after-treatment system for a Diesel engine including
- a first Selective Reduction Catalyst SCR (SCR1) coupled with
- a second SCR (SCR2) of the iron-zeolite type arranged immediately downstream of the first SCR according to a gas stream circulation and
- a urea based reducing agent doser (INJ1) arranged immediately upstream of the first SCR, according to said gas stream circulation, and
- hydrocarbons injection means (INJ2) arranged at the after-treatment system to introduce hydrocarbons therein in order to cooperate with said second SCR to convert N2O produced by said first SCR,
and **characterized in** comprising control means (ECU) to control said first doser and said hydrocarbon injection means, wherein the control means are configured for executing all the method steps of claim 1.

3. An exhaust gas after-treatment system according to claim 2, including in succession, according to a an exhaust gas flow circulation
- a Diesel Oxidation catalyst (DOC),
- a Diesel Particulate Filter (DPF),
- said first doser (INJ1) for a urea based reducing agent,
- said first Selective Reduction Catalyst (SCR) (SCR1),
- said second SCR (SCR2) of the iron-zeolite and optionally
- a Clean Up catalyst (CUC) and
- said hydrocarbons injection means (INJ2) arranged to introduce hydrocarbons in the after-treatment system in order to cooperate with said second SCR to convert N2O produced by said first SCR.

4. System according to claim 3, wherein said hydrocarbons injection means (INJ2) comprise an injector for introducing hydrocarbons preferably arranged immediately upstream of said DPF or between said first and second SCRs.

5. System according to -claim 4, wherein said control means are configured to control said first doser in such a way to fill only said first SCR with ammonia.

6. System according to claim 4, wherein control means are configured to control said first doser (INJ1) in such a way to saturate said first SCR (SCR1) with ammonia and at least partially fill said second SCR (SCR2).

7. System according to any one of previous claims 2 - 6, wherein said control means are configured to control said hydrocarbon injection means (INJ2) to adjust an amount of hydrocarbon to be introduced in the ATS such that said amount is inversely proportional with a temperature value measured at the second SCR.

8. System according to any one of the previous claims 2 - 6, wherein said control means are configured to enable said hydrocarbon injection means when a temperature of said first SCR (SCR1) exceeds 250°C.

9. System according to any one of the claims 4 - 8, wherein, said control means are configured to control said hydrocarbons injection means to introduce hydrocarbons as function of oxygen content in the exhaust gas.

10. System according to any one of the claims 4 - 9, wherein said control means are arranged to control said hydrocarbon injection means (INJ2) in order to introduce HC in the ATS according to a sequence of pulses, wherein said control means are configured to calculate a frequency of said pulses and an amount of HC per pulse as a function of said second SCR temperature.

11. System according to any one of the claims 4 - 10, wherein when said hydrocarbon injection means are arranged upstream of said Diesel Oxidation catalyst (DOC), or upstream of said Diesel Particulate Filter (DPF), the control means are arranged to command hydrocarbon injection synchronized with a condition of low oxygen in the exhaust gas, such as during an acceleration.

12. A Vehicular propulsion system comprising a Diesel engine and an exhaust gas after-treatment system according to any one of the claims 2 - 9, wherein the after-treatment system is arranged to treat the exhaust gas produced by the Diesel engine.

13. Propulsion system according to claim 12, wherein said control means (ECU) are further configured to control the Diesel engine operation and to monitor and control the after-treatment system and wherein the control means are arranged to command fuel post-injections when the second SCR temperature is below a predetermined threshold with an amount of fuel injected function of a temperature of said second SCR.

## Patentansprüche

1. Verfahren zur Steuerung eines Abgasnachbehandlungssystems für einen Dieselmotor, umfassend:
- einen ersten selektiven Reduktionskatalysator (SCR) (SCR1), der mit
- einem zweiten SCR (SCR2) vom Eisenzeolith-Typ gekoppelt ist, der unmittelbar stromabwärts des ersten SCR, entsprechend einer Gasflusszirkulation, angeordnet ist ; und
- eine Vorrichtung (INJ1) zur Dosierung eines harnstoffbasierten Reduktionsmittels, die unmittelbar stromaufwärts des ersten SCR, entsprechend der Gasflusszirkulation, angeordnet ist; und
- Kohlenwasserstoffeinleitungsmittel (INJ2), die im Abgasnachbehandlungssystem angeordnet sind, um Kohlenwasserstoffe einzuleiten und mit dem zweiten SCR-Katalysator zusammenzuarbeiten und das vom ersten SCR-Katalysator erzeugte N2O umzuwandeln,
wobei das Verfahren die folgenden Schritte umfasst:
- (Schritt 1): Erfassung von Eingangssignalen durch Messung oder Berechnung, die repräsentativ sind für:
o Temperatur am zweiten SCR
o NOx-Konzentration im Abgasstrom des abgestellten Motors
o Abgasmassenstrom
o Motordrehmoment
o in den Brennraum eingespritzte Kraftstoffmenge
o Sauerstoffgehalt der Abgase
- (Schritt 2): Berechnung des N2O-Reduktionspotenzials " N₂O-Reduktionspotenzial" anhand der Eingangssignale aus Schritt 1, definiert als die Fähigkeit des zweiten SCR-Katalysators, N2O unter den gegebenen Bedingungen zu reduzieren;
- (Schritt 3): Berechnung des HC-Behandlungsaufwands "HC-Behandlungsaufwand" anhand der Eingangssignale aus Schritt 1, definiert als die Menge an Kohlenwasserstoffen, die erforderlich ist, um das N2O-Reduktionspotenzial des zweiten SCR-Katalysators vollständig auf seine maximale Kapazität zurück zu bringen, wenn unter den gegebenen Bedingungen ein Kohlenwasserstoffimpuls eingeleitet wird;
- Schritt 4: Basierend auf den Berechnungen aus Schritt 2 und Schritt 3 wird entschieden, ob entweder ein Kohlenwasserstoffimpuls erforderlich ist oder ob dieser zeitlich verschoben werden kann. Wenn Schritt 4 = ja, wird entschieden, einen HC-Impuls einzuführen.
- Schritt 5: Starten der Einspritzimpulse, um die in Schritt 1 berechnete HC-Menge einzuführen und abzuwarten, bis die angegebene Menge vollständig eingespritzt wurde.
- Schritt 6: Zurücksetzen der vorherigen Erfassungen und Berechnungen und Zurückkehren zum Startschritt 1. Andernfalls, wenn Schritt 4 = nein, wird entschieden, die Einführung eines HC-Impulses zeitlich zu verschieben. Der Iterationskreis kehrt sofort zum Startschritt 1 zurück.

2. Abgasnachbehandlungssystem für einen Dieselmotor, bestehend aus
- einem ersten selektiven Reduktionskatalysator (SCR) (SCR1), der mit
- einem zweiten SCR (SCR2) vom Eisenzeolith-Typ gekoppelt ist, der unmittelbar stromabwärts des ersten SCR, entsprechend einer Gasstromzirkulation, angeordnet ist, und
- mit einer Vorrichtung zum Dosieren eines Reduktionsmittels auf Harnstoffbasis (INJ1), die unmittelbar aufwärts des ersten SCR, entsprechend der Gastromzirkulation, angeordnet ist; und
- mit einer Kohlenwasserstoffeinspritzeinrichtung (INJ2) in das Nachbehandlungssystem zur Einspeisung von Kohlenwasserstoffen, die mit dem zweiten SCR-System zusammenwirken, um das vom ersten SCR-System erzeugte N₂O umzuwandeln,
**gekennzeichnet durch** Steuermittel (ECU) zur Steuerung der ersten Dosiervorrichtung und der KohlenwasserstoffEinspritzmittel, wobei die Steuermittel so konfiguriert sind, dass sie alle Schritte des Verfahrens gemäß Anspruch 1 ausführen.

3. Abgasnachbehandlungssystem gemäß Anspruch 2, das nacheinander, entsprechend der Abgasstromzirkulation, Folgendes umfasst:
- einen Dieseloxidationskatalysator (DOC),
- einen Dieselpartikelfilter (DPF),
- die erste Dosiereinrichtung (INJ1) für ein harnstoffbasiertes Reduktionsmittel,
- den ersten selektiven Reduktionskatalysator (SCR) (SCR1),
- den zweiten SCR (SCR2) vom Eisenzeolith-Typ und optional
- einen Reinigungskatalysator (CUC) und
- Kohlenwasserstoffeinspritzmittel (INJ2) zur Einspeisung von Kohlenwasserstoffen in das Nachbehandlungssystem, die mit dem zweiten SCR zusammenwirken, um das vom ersten SCR erzeugte N₂O umzuwandeln.

4. System nach Anspruch 3, wobei die Kohlenwasserstoffeinspritzmittel (INJ2) einen Injektor zur Einspeisung von Kohlenwasserstoffen umfassen, der vorzugsweise unmittelbar aufwärts des DPF oder zwischen dem ersten und zweiten SCR angeordnet sind.

5. System nach Anspruch 4, wobei die Steuermittel so konfiguriert sind, dass sie die erste Dosiervorrichtung so steuern, dass nur der erste SCR mit Ammoniak gefüllt wird.

6. System nach Anspruch 4, wobei die Steuermittel so konfiguriert sind, dass sie die erste Dosiervorrichtung (INJ1) so steuern, dass der erste SCR (SCR1) mit Ammoniak gesättigt und der zweite SCR (SCR2) zumindest teilweise gefüllt wird.

7. System nach einem der vorhergehenden Ansprüche 2 bis 6, wobei die Steuermittel dazu konfiguriert sind, die Kohlenwasserstoffeinspritzmittel (INJ2) zu steuern und eine in den ATS einzuleitende Kohlenwasserstoffmenge als Funktion der Temperatur des zweiten SCR derart zu regeln, so dass die Menge umgekehrt proportional zu einem am zweiten SCR gemessenen Temperaturwert ist.

8. System nach einem der vorhergehenden Ansprüche 2 bis 6, wobei die Steuermittel so konfiguriert sind, dass sie die Kohlenwasserstoffeinspritzmittel aktivieren, wenn eine Temperatur des ersten SCR (SCR1) 250 °C überschreitet.

9. System nach einem der Ansprüche 4 bis 8, wobei die Steuermittel so konfiguriert sind, dass sie die Kohlenwasserstoffeinspritzmittel so steuern, dass die Kohlenwasserstoffe in Abhängigkeit vom Abgassauerstoffgehalt eingeleitet werden.

10. System nach einem der Ansprüche 4 bis 9, wobei die Steuermittel so konfiguriert sind, dass sie die Kohlenwasserstoffeinspritzmittel (INJ2) so steuern, dass HC gemäß einer Impulsfolge in den ATS eingeleitet wird, wobei die Steuermittel so konfiguriert sind, dass sie die Impulsfrequenz und die HC-Menge pro Impuls in Abhängigkeit von der Temperatur des zweiten SCR berechnen.

11. System nach einem der Ansprüche 4 bis 10, wobei die Steuermittel, wenn die Kohlenwasserstoffeinspritzmittel aufwärts des Dieseloxidationskatalysators (DOC) oder aufwärts des Dieselpartikelfilters (DPF) angeordnet sind, so angeordnet sind, dass sie eine Kohlenwasserstoffeinspritzung synchron mit einem niedrigen Abgassauerstoffgehalt, beispielsweise während einer Beschleunigung, steuern.

12. Fahrzeugantriebssystem, umfassend einen Dieselmotor und ein Abgasnachbehandlungssystem nach einem der Ansprüche 2 bis 9, wobei das Nachbehandlungssystem so angeordnet ist, dass es vom Dieselmotor erzeugten Abgase behandelt.

13. Antriebssystem nach Anspruch 12, wobei die Steuermittel (ECU) ferner so konfiguriert sind, dass sie den Betrieb des Dieselmotors steuern und das Nachbehandlungssystem überwachen und steuern, und wobei die Steuermittel so angeordnet sind, dass sie Kraftstoffnacheinspritzungen steuern, wenn die Temperatur des zweiten SCR unter einem vorgegebenen Schwellenwert liegt, wobei die eingespritzte Kraftstoffmenge von der Temperatur des zweiten SCR abhängt.

## Revendications

1. Procédé de commande d'un système de post-traitement des gaz d'échappement pour un moteur diesel, comprenant :
- un premier catalyseur de réduction sélective SCR (SCR1) couplé à
- un deuxième SCR (SCR 2) du type à zéolite de fer disposé immédiatement en aval du premier SCR selon une circulation d'un flux de gaz ;
- un dispositif de dosage d'agent réducteur à base d'urée (INJ1) disposé immédiatement en amont du premier SCR, selon ladite circulation d'un flux de gaz ; et
- des moyens d'introduction d'hydrocarbures (INJ2) disposés dans le système de post-traitement pour introduire des hydrocarbures à son intérieur afin de coopérer avec ledit deuxième SCR et de convertir le N₂O produit par ledit premier SCR,
le procédé comprenant les étapes suivantes :
- (Étape 1) : acquisition de signaux d'entrée par mesure ou calcul représentatifs de :
o température au niveau du deuxième SCR
o concentration de NOx dans le flux d'échappement du moteur arrêté
o débit massique des gaz d'échappement
o couple moteur
o quantité de carburant injectée dans la chambre de combustion
o teneur en oxygène des gaz d'échappement
- (Étape 2) : utilisation des signaux d'entrée de l'Étape 1 pour calculer le « potentiel de réduction du N₂O », défini comme la capacité du deuxième SCR à réduire le N₂O dans les conditions actuelles ;
- (Étape 3) : utilisation des signaux d'entrée de l'Étape 1, pour calculer « l'effort de traitement de HC « , défini comme la quantité d'hydrocarbures requis pour récupérer complètement le potentiel de réduction du N₂0 du deuxième SCR jusqu'à sa capacité maximale, lorsqu'une impulsion d'hydrocarbures est introduite dans les conditions actuelles ;
- Étape 4 : sur la base des calculs de l'Étape 2 et de l'Étape 3, décision si une impulsion d'hydrocarbures est nécessaire, ou si une telle impulsion d'hydrocarbures peut être reportée ;
si l'Étape 4 = oui ; on décide d'introduire une impulsion de HC, ensuite
- Étape 5 : démarrage d'impulsions d'injection pour introduire une quantité de HC calculée à l'Étape 1 et attendre que la quantité indiquée soit complètement injectée, ensuite
- Étape 6 : réinitialisation des acquisitions et des calculs précédents effectuée et retour à l'Étape de départ 1 ; sinon, si l'Étape 4 = non : on décide de reporter l'introduction d'une impulsion de HC, le circuit d'itération revient immédiatement à l'Étape de départ 1.

2. Système de post-traitement des gaz d'échappement pour un moteur diesel, comprenant
- un premier catalyseur de réduction sélective SCR (SCR1) couplé à
- un deuxième SCR (SCR 2) du type à zéolite de fer disposé immédiatement en aval du premier SCR selon une circulation d'un flux de gaz ;
- un dispositif de dosage d'agent réducteur à base d'urée (INJ1) disposé immédiatement en amont du premier SCR, selon ladite circulation d'un flux de gaz ; et
- des moyens d'injection d'hydrocarbures (INJ2) dans le système de post-traitement pour introduire des hydrocarbures à son intérieur afin de coopérer avec ledit deuxième SCR pour convertir le N₂O produit par ledit premier SCR, et
**caractérisé en ce qu'**il comprend des moyens de commande (ECU) pour commander ledit premier dispositif de dosage et lesdits moyens d'injection d'hydrocarbures, dans lequel les moyens de commande sont configurés pour effectuer toutes les étapes du procédé selon la revendication 1.

3. Système de post-traitement des gaz d'échappement selon la revendication 2, comprenant en succession, selon la circulation d'un flux de gaz d'échappement,
- un catalyseur d'oxydation diesel (DOC),
- un filtre à particules diesel (DPF),
- ledit premier dispositif de dosage (INJ1) pour un agent réducteur à base d'urée,
- ledit premier catalyseur de réduction sélective (SCR) (SCR1),
- ledit deuxième SCR (SCR2) du type à zéolithes de fer et éventuellement
- un catalyseur de nettoyage (CUC) et
- des moyens d'injection d'hydrocarbures (INJ2) agencés pour introduire des hydrocarbures dans le système de post-traitement afin de coopérer avec ledit deuxième SCR pour convertir le N₂O produit par ledit premier SCR.

4. Système selon la revendication 3, dans lequel lesdits moyen d'injection d'hydrocarbures (INJ2) comprennent un injecteur pour l'introduction d'hydrocarbures, de préférence disposé immédiatement en amont dudit DPF ou entre lesdits premier et deuxième SCR.

5. Système selon la revendication 4, dans lequel lesdits moyens de commande sont configurés pour commander ledit premier dispositif de dosage è fin de remplir uniquement le premier SCR d'ammoniac.

6. Système selon la revendication 4, dans lequel lesdits moyens de commande sont configurés pour commander ledit premier dispositif de dosage (INJ1) afin de saturer ledit premier SCR (SCR1) d'ammoniac et remplir au moins partiellement ledit deuxième SCR (SCR2).

7. Système selon l'une quelconque des revendications précédentes 2 à 6, dans lequel lesdits moyens de commande sont configurés pour commander lesdits moyens d'injection d'hydrocarbures (INJ2) et réguler une quantité d'hydrocarbures à introduire dans l'ATS en fonction de la température dudit deuxième SCR, de telle sorte que ladite quantité est inversement proportionnelle à une valeur de température mesurée sur le deuxième SCR.

8. Système selon l'une quelconque des revendications précédentes 2 à 6, dans lequel lesdits moyens de commande sont configurés pour activer lesdits moyens d'injection d'hydrocarbures lorsqu'une température dudit premier SCR (SCR1) dépasse 250°C.

9. Système selon l'une quelconque des revendications 4 à 8, dans lequel lesdits moyens de commande sont configurés pour commander lesdits moyens d'injection d'hydrocarbures pour introduire les hydrocarbures en fonction de la teneur en oxygène des gaz d'échappement.

10. Système selon l'une quelconque des revendications 4 à 9, dans lequel lesdits moyens de commande sont disposés pour commander lesdits moyens d'injection d'hydrocarbures (INJ2) afin d'introduire des HC dans l'ATS selon une séquence d'impulsions, lesdits moyens de commande étant configurés pour calculer une fréquence desdites impulsions et une quantité de HC par impulsion en fonction de la température du deuxième SCR.

11. Système selon l'une quelconque des revendications 4 à 10, dans lequel lorsque lesdits moyens d'injection d'hydrocarbures sont disposés en amont dudit catalyseur d'oxydation diesel (DOC), ou en amont dudit filtre à particules diesel (DPF), les moyens de commande sont disposés pour commander une injection d'hydrocarbures synchronisée avec une condition d'oxygène bas dans les gaz d'échappement, telle comme pendant une accélération.

12. Système de propulsion de véhicule comprenant un moteur diesel et un système de post-traitement des gaz d'échappement selon l'une quelconque des revendications 2 à 9, dans lequel le système de post-traitement est agencé pour traiter les gaz d'échappement produits par le moteur diesel.

13. Système de propulsion selon la revendication 12, dans lequel lesdits moyens de commande (ECU) sont en outre configurés pour commander le fonctionnement du moteur diesel et pour surveiller et commander le système de post-traitement, et dans lequel les moyens de commande sont agencés pour commander des post-injections de carburant lorsque la température du deuxième SCR est inférieure à un seuil prédéterminé, la quantité de carburant injectée étant fonction d'une température dudit deuxième SCR.
